# EUROPÄISCHE PATENTSCHRIFT

(11) **EP 0 792 826 B1**
(45) Veröffentlichungstag und Bekanntmachung des Hinweises auf die Patenterteilung: **05.06.2002**
(21) Anmeldenummer: 96121013.5
(22) Anmeldetag: 31.12.1996
(51) Int. Cl.: B65G 69/28

(54) **Überladebrücke für Rampen**
Loading bridge for ramps
Pont de transbordement pour rampes

(30) Priorität: 27.02.1996 DE 19607274
(43) Veröffentlichungstag der Anmeldung: 03.09.1997
(73) Patentinhaber: Alten Gerätebau GmbH, 30974 Wennigsen (DE)
(72) Erfinder: Alten, Kurt, 30967 Wennigsen (DE)
(74) Vertreter: Depmeyer, Jochen

(56) Entgegenhaltungen:
- DE-A- 1 756 725
- DE-C- 3 439 651
- DE-C- 4 227 294
- DE-C- 4 316 956

## Beschreibung

Die Erfindung betrifft eine Überladebrücke für Rampen mit einer am freien Ende ein- und ausfahrbaren Verlängerung zur Auflage auf der zu be- bzw. entladenden Plattform versehenen, am rampenseitigen Ende um eine waagerechte Achse verschwenkbaren Brückenplatte und ein- oder beidseitig an der Brückenplatte angeordneten, zur Seite hin ausfahrbaren und wieder einfahrbaren Stützelementen zur Halterung der Brückenplatte in der Ruhestellung, wobei sich die Stützelemente seitlich neben der Brückenplatte an der Rampe abstützen und durch eine Bewegung der Verlängerung bzw. eines sie tragenden Schlittens betätigt werden und wobei ferner die Brückenplatte in einer ihrer Grösse entsprechenden Ausnehmung der Rampe angeordnet ist und bei der in der Ruhestellung befindlichen Brückenplatte deren Oberfläche und die Rampenoberfläche bündig sind (siehe zum Beispiel das Dokument DE-C-4 227 294).

Bei den bekannten Brücken dieser Art ist das Stützelement ein quer zur Brückenplatte verlaufender Bolzen, der in der Wirkstellung seitlich absteht und beim Absenken der Brückenplatte in die Ruhelage im Grund einer oben offenen Vertiefung der Rampe sein Widerlager findet, um so sicherzustellen, dass die Brückenplatte unter der Last des Rampenverkehrs ihre Stellung beibehält. Es versteht sich, dass sowohl seitlich abstehende Bolzen als auch Vertiefungen in der Rampenoberfläche gefährlich sind.

Aufgrund der Erfindung sollen diese Nachteile behoben werden. Die Erfindung will also seitlich überstehende Elemente und ferner oben offene Aussparungen in der Rampe vermeiden.

Zur Lösung dieser Aufgabe sind erfindungsgemäss die Stützelemente derart weit unterhalb der Oberfläche der Brückenplatte angeordnet, dass sie sich bei in die obere Endstellung geschwenkter Brückenplatte noch unterhalb der Rampenoberfläche befinden. Durch eine solche Lage der Stützelemente wird verhindert, dass die zwangsläufig zum Abstützen nach aussen zu führenden Stützelemente bei nach oben geschwenkter Brückenplatte in einen oberhalb der Rampe befindlichen Bereich gelangen können. Demgemäss sind auch die Ausnehmungen zur Aufnahme der Stützelemente unterhalb der Rampenoberfläche vorgesehen z.B. in Form von örtlichen Vertiefungen in den die Rampenausnehmung seitlich begrenzenden Wandungen.

Eine solche Ausbildung der Stützelemente lässt sehr einfach und betriebssicher durch eine seitlich an der Brückenplatte verdrehbar gelagerte Welle erreichen, die am oberen Ende einen von der Verlängerung beaufschlagbaren Hebelarm und an ihrem unteren Ende einen Schwenkhebel aufweist, der durch Verschwenken der Welle um ihre Längsachse nach aussen in die Wirkstellung und von dieser Wirkstellung aus wieder in den Bereich der Brückenplatte zurück in seine Ruhelage schwenkbar ist.

Weitere Einzelheiten der Erfindung werden anhand der Zeichnung erläutert, in der ein Ausführungsbeispiel der Erfindung dargestellt ist. Es zeigen :
Fig. 1 einen Teillängsschnitt durch eine Überladebrücke für Rampen in der Ruhestellung ( mit eingefahrener Verlängerung der Brückenplatte ),
Fig. 2 die Brücke gemäss Fig. 1 in der Teildraufsicht und
Fig. 3 - 5 je eine Teiluntersicht von einer Brücke gemäss Fig. 1, wobei in Fig. 3 die Verlängerung ausgefahren ist, in Fig. 4 zwar die Verlängerung eingefahren, die Brückenplatte jedoch ihre Ruhestellung noch nicht eingenommen hat und in Fig. 5 sich die Brückenplatte in ihrer Ruhestellung befindet sowie das Stützelement wirksam ist.

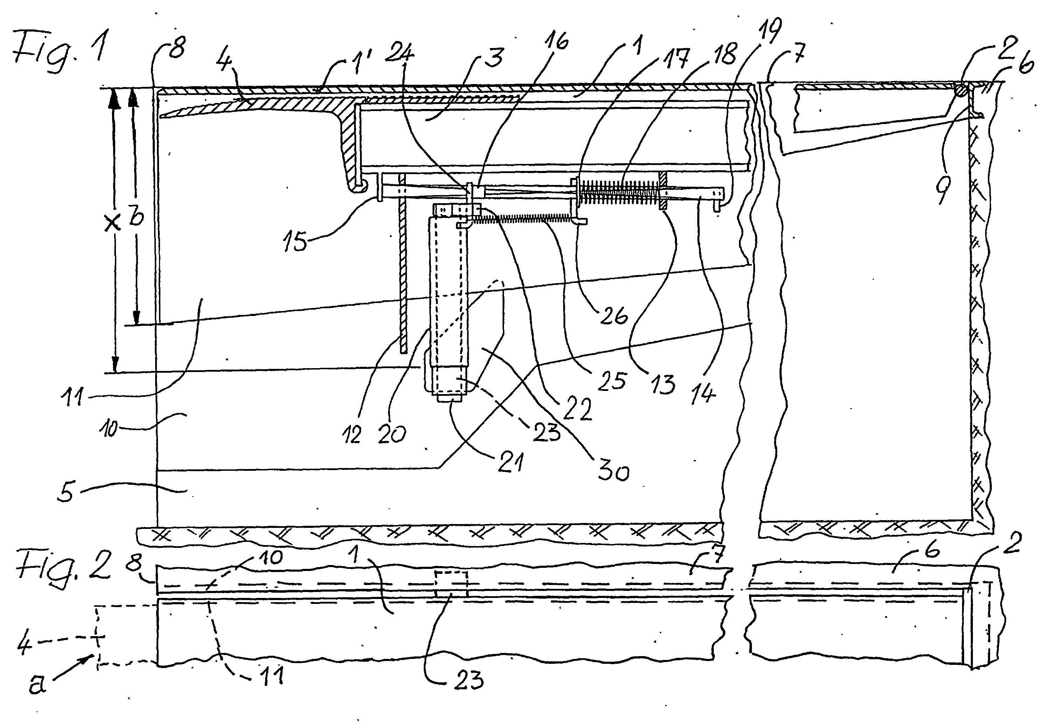

Die Brückenplatte 1 mit ihrem Deckblech 1' ist an ihrem hinteren Ende um eine waagerechte Achse 2 verschwenkbar. Sie hat an ihrem vorderen Ende einen längs zur Brücke verschiebbaren Schlitten 3 mit einer Verlängerung 4 zur Auflage und zur Abstützung auf der zu be- bzw. entladenden Plattform z.B. eines LKW. In Fig. 2 ist die ausgefahrene Verlängerung 4 bei a angedeutet.

Die im Grundriss rechteckige Brückenplatte 1 ist in einer geringfügig grösseren Ausnehmung 5 einer Rampe 6 angeordnet, deren Oberfläche mit 7 bezeichnet ist. Die Brückenplatte 1 schliesst in der Ruhestellung vorne mit der Rampenkante 8 ab. Die Ausnehmung 5 hat eine zum Hineinschwenken der Brückenplatte 1 ausreichend bemessene Tiefe und ist von einem Stahlprofil 9 und von einem Blech 10 seitlich begrenzt.

Zu beiden Seiten der Brückenplatte 1 befindet sich an der Brückenplatte 1 noch ein etwa dreieckförmiges Seitenblech 11, das aus Sicherheitsgründen den Spalt zwischen Brückenplatte 1 und Rampe 6 überbrücken soll, wenn die Brückenplatte 1 nach oben geschwenkt ist. Der grösste Schwenkweg am vorderen Ende der Brückenplatte 1 ist geringfügig kleiner als die grösste Erstreckung b des Seitenbleches 11 nach unten, das sich natürlich mit dem Verschwenken der Brückenplatte 1 nach oben bewegt.

Mit der Brückenplatte 1 ist ein Schild 12 und ein Querblech 13 verbunden; diese Elemente dienen zur verschiebbaren Lagerung eines längs zur Brückenplatte 1 verlaufenden Stössels 14 mit viereckigem Querschnitt. Er kann vorne von einem Mitnehmer 15 des Schlittens 3 beaufschlagt werden, hat ebenfalls einen Mitnehmer 16, der quer absteht, und ein Widerlager 17 für eine Druckfeder 18, die zwischen dem Widerlager 17 und dem Querblech 13 den Stössel 14 umschliesst. Am hinteren Ende des Stössels 14 befindet sich noch ein Stift 19 als Endbegrenzung.

An der Innenseite der Seitenbleche 11 ist ein senkrechtes Rohr 20 befestigt, das als Lagerstelle für eine Welle 21 dient. Sie ist oben mit einem Hebelarm 22 und unten mit einem Schwenkhebel 23 versehen, der das Stützelement für die in der Ruhestellung befindliche Brückenplatte 1 gemäss Fig. 1, 2 und 5 bildet. Der Hebelarm 22 ist mit einem Querstift 24 versehen, der von dem Mitnehmer 16 beaufschlagt werden kann und zugleich als Befestigung für eine Zugfeder 25 dient, welche mit dem anderen Ende in der Nähe des Widerlagers 17 über einen weiteren Stift 26 mit dem Stössel 14 verbunden ist.

Das Blech 10 ist mit einer Aussparung 30 versehen; auf dem Grund dieser Aussparung stützt sich der Schwenkhebel in der Stellung gemäss Fig. 1, 2 und 5 ab. Damit ist die Brückenplatte 1 in der Ruhelage gesichert und kann unter der Verkehrslast nicht absinken.

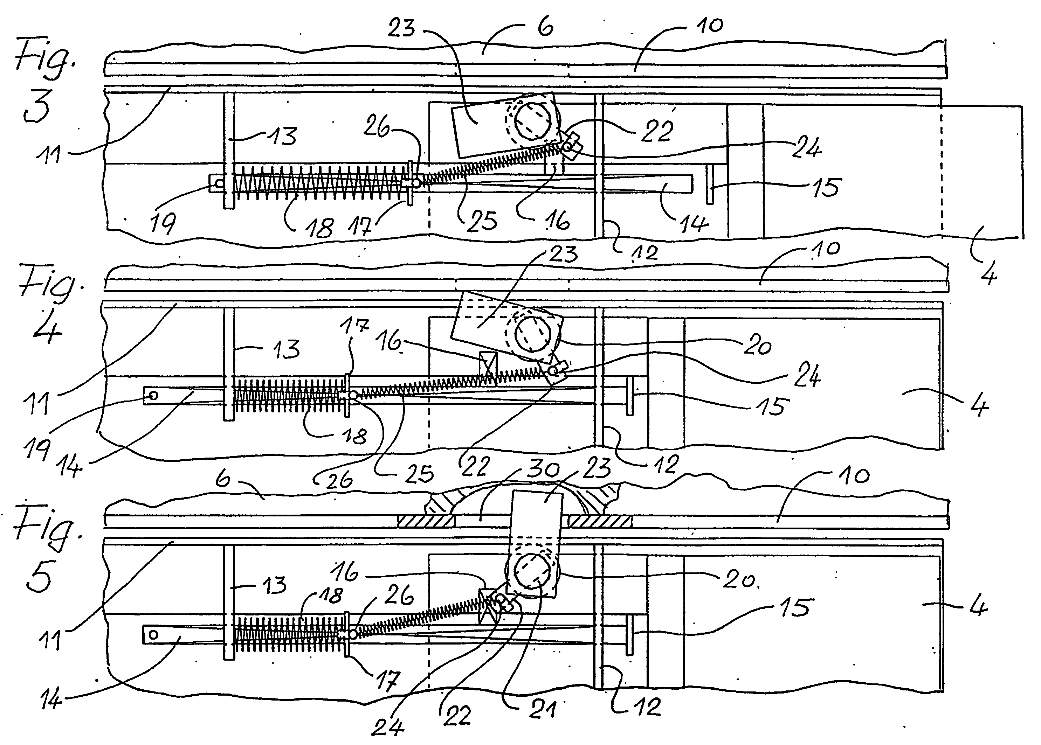

Ist die Brücke gemäss Fig. 3 bei ausgefahrener Verlängerung 4 in Betrieb, so ist der Schwenkhebel 23 eingeklappt. Die Brückenplatte 1 kann beliebig nach oben oder unten geschwenkt werden, ohne durch den Schwenkhebel 23 behindert zu werden. Dabei hält der Stössel 14 über seinen Mitnehmer 16 unter der Wirkung der Druckfeder 18 den Schwenkhebel 23 in der Stellung gemäss Fig. 3.

Soll die Brücke ausser Betrieb genommen werden, so wird der Schlitten 3 mit der Verlängerung 4 in oberer Endstellung der Brückenplatte 1 eingefahren. Der Mitnehmer 15 verdrängt dabei den Stössel 14 nach hinten. Der Mitnehmer 16 hebt ab, indem die Druckfeder 18 gespannt wird. Nunmehr kann die Zugfeder 25 den Schwenkhebel 23 nach aussen schwenken. Dieser berührt dabei das Blech 10. In dieses kann er jedoch erst dann eintauchen, wenn die Brückenplatte 1 mit ihrem Schwenkhebel 23 in den Bereich der Ausnehmung 30 kommt.

Mit einem weiteren Absenken der Brückenplatte 1 gelangt der Schwenkhebel dabei zunächst in den oberen Teil der Aussparung 30. Ist die Oberfläche der Brückenplatte 1 mit der Rampenoberfläche 7 bündig, so hat der Schwenkhebel 23 die Stützstellung gemäss Fig. 5 eingenommen.

Soll die Brücke wieder in Betrieb genommen werden, so kommt beim Ausfahren des Schlittens 3 der Mitnehmer 15 frei. Unter der Wirkung der sich entspannenden Druckfeder 18 wird der Schwenkhebel 23 gegen den Uhrzeigersinn gedreht, um so die Stellung gemäss Fig. 3 zu erreichen.

Wie aus Fig. 1 erkennbar, ist der Schwenkhebel 23 derart tief unterhalb der Oberfläche der Brückenplatte 1 angeordnet, dass der Schwenkhebel 23 auch dann nicht über die Rampenoberfläche 7 treten kann, wenn die Brückenplatte 1 ihre obere Endstellung erreicht hat. Das Mass der Tiefenstellung des Schwenkhebels 23 ist bei x angegeben. Es ist wesentlich grösser als der mögliche Hub der Brückenplatte 1 im Bereich der Welle 21. Wie auch Fig. 1 erkennen lässt, befindet sich der Schwenkhebel 23 noch unterhalb der unteren Kante des Seitenblechs 11 im Bereich der Welle 21.

Steht der Schwenkhebel 23 nur unter der Wirkung der Zugfeder 25, so ist es nicht schädlich, dass der Schwenkhebel 23 das Blech 10 beim Verschwenken der Brückenplatte 1 berührt. Diese Feder 25 ist vergleichsweise schwach und ausserstande, gemäss Fig. 3 die Druckfeder 18 zu verformen. Die Zugfeder 25 kann also keine Stösselbewegung bewirken und die Stellung des Schwenkhebels 23 gemäss Fig. 3 nicht ändern. Indessen ist die Zugfeder 25 so bemessen, dass sie in der Lage ist, den Schwenkhebel 23 gemäss Fig. 4 und 5 in die Stützstellung zu ziehen. Der Schwenkhebel 23 liegt dabei über den oben gelegenen Stift 24 am Mitnehmer 16 an, um so eine Querstellung des Schwenkhebels 23 sicherzustellen.

Die Tiefenstellung des Schwenkhebels 23 ist auch so gewählt, dass die Ausnehmung 30 - wie aus Fig. 1 ersichtlich - nach oben hin erweitert werden kann, um so gewissermassen ein Hineindrehen des Schwenkhebels 23 in die Ausnehmung 30 unter der Wirkung der Zugfeder 25 zu erreichen, wenn die Brückenplatte 1 zur Einnahme der Ruhestellung von der oberen Endstellung aus abgesenkt werden soll.

## Patentansprüche

1. Überladebrücke für Rampenmit mit einer mit am freien Ende ein- und ausfahrbaren Verlängerung (4) zur Auflage auf der zu be- bzw. entladenden Plattform versehenen, am rampenseitigen Ende um eine waagerechte Achse (2) verschwenkbaren Brückenplatte (1) und ein- oder beidseitig an der Brückenplatte (1) angeordneten, zur Seite hin ausfahrbaren und wieder einfahrbaren Stützelementen (23) zur Halterung der Brückenplatte (1) in der Ruhestellung, wobei sich die Stützelemente (23) seitlich neben der Brückenplatte (1) an der Rampe (6) abstützen und durch eine Bewegung der Verlängerung (4) bzw. eines sie tragenden Schlittens betätigt werden und wobei ferner die Brückenplatte (1) in einer ihre Grösse entsprechenden Ausnehmung (5) der Rampe (6) angeordnet ist und bei der in der Ruhestellung befindlichen Brückenplatte (1) deren Oberfläche (1') und die Rampeboberfläche (7) bündig sind, **dadurch gekennzeichnet, dass** die Stützelemente (23) derart weit unterhalb der Oberfläche (1') der Brückenplatte (1) angeordnet sind, dass sie sich bei in der oberen Endstellung befindlichen Brückenplatte (1) noch unterhalb der Rampenoberfläche (7) befinden.

2. Brücke nach Anspruch 1, **dadurch gekennzeichnet, dass** sich die Stützelemente (23) unterhalb des benachbarten Randabschnittes der zu beiden Seiten der Brückenplatte (1) befestigten, sich nach unten erstreckenden Seitenbleche (11) befinden.

3. Brücke nach Anspruch 1, **dadurch gekennzeichnet, dass** das Stützelement ein am unteren Ende einer senkrechten, verdrehbaren Welle (21) befestigter Schwenkhebel (23) ist und die Verlängerung (4) bzw. ihr Schlitten (3) auf das obere Ende der Welle (21) zum Verdrehen dieser Welle einwirkt.

4. Brücke nach Anspruch 3, **dadurch gekennzeichnet, dass** die Welle (21) in einem Rohr (20) gelagert ist, das an der Innenseite der an der Brückenplatte (1) befestigten, sich nach unten erstreckenden Seitenbleche (11) befestigt ist.

5. Brücke nach Anspruch 3, **dadurch gekennzeichnet, dass** am oberen Ende der Welle (21) ein Hebelarm (22) befestigt ist, auf den der Mitnehmer (16) eines längs zur Brückenplatte (1), durch die Verlängerung (4) bzw. ihr Schlitten (3) gegen die Wirkung einer Feder (18) bewegbaren Stössels (14) einwirkt.

6. Brücke nach Anspruch 5, **dadurch gekennzeichnet, dass** mit Entlastung des Stössels (14) und sich der dabei entspannenden Feder (18) der Mitnehmer (16) den Schwenkhebel (23) von der Wirkstellung in die Ruhestellung ( eingezogener Zustand ) bewegt.

7. Brücke nach Anspruch 5 und 6, **dadurch gekennzeichnet, dass** mit dem Hebelarm (22) bzw. einem daran befestigten Stift (24) das eine Ende einer Zugfeder (25) verbunden ist, die mit ihrem anderen Ende am Stössel (14) angreift und zum Verschwenken des Schwenkhebels (23) in die Wirkstellung dient.

8. Brücke nach Anspruch 7, **dadurch gekennzeichnet, dass** bei in der Wirkstellung befindlichem Schwenkhebel (23) der Hebelarm (22) bzw. sein Stift (24) unter der Wirkung der Zugfeder (25) an dem Mitnehmer (16) des Stössels (14) anliegt.

9. Brücke nach Anspruch 1, **dadurch gekennzeichnet, dass** das Stützelement ( Schwenkhebel 23) in der Wirkstellung in eine lochartige Ausnehmung (30) einer Auskleidung (Blech 10) eingreift, die die zur Aufnahme der Brückenplatte (1) dienende Ausnehmung (5) in der Rampe (6) ganz oder zum Teil seitlich begrenzt.

10. Brücke nach Anspruch 7 und 9, **dadurch gekennzeichnet, dass** der Schwenkhebel (23) unter der Wirkung der Zugfeder (25) die Auskleidung (10) berührt, wenn die Brückenplatte (1) von ihrer oberen Endstellung in die Ruhestellung bewegt wird.

## Claims

1. Bridging device for platforms, having a bridge plate (1) which is provided with an extension portion (4), which is retractable and extendable at its free end, for support on the deck to be loaded or unloaded, and which bridge plate is pivotable about a horizontal axis (2) at its end facing the platform, and having supporting members (23), which are disposed on one or both sides of the bridge plate (1) and can be extended laterally and retracted again, to support the bridge plate (1) in the inoperative position, the supporting members (23) being supported laterally adjacent the bridge plate (1) on the platform (6) and being actuated by a movement of the extension portion (4) or resp. of a carrier carrying said portion, and the bridge plate (1) also being disposed in a recess (5) in the platform (6) corresponding to its size and, when the bridge plate (1) is in the inoperative position, the surface (1') thereof and the platform surface (7) being flush with each other, **characterised in that** the supporting members (23) are disposed so far beneath the surface (1') of the bridge plate (1) that they are still situated beneath the platform surface (7) when the bridge plate (1) is in the upper end position.

2. Bridging device according to claim 1, **characterised in that** the supporting members (23) are situated beneath the adjacent edge portion of the downwardly extending lateral plates (11), which are secured on both sides of the bridge plate (1).

3. Bridging device according to claim 1, **characterised in that** the supporting member is a pivotal lever (23), which is secured on the lower end of a vertical, pivotable shaft (21), and the extension portion (4) or resp. its carrier (3) acts on the upper end of the shaft (21) to rotate said shaft.

4. Bridging device according to claim 3, **characterised in that** the shaft (21) is mounted in a pipe (20), which is secured on the inside of the downwardly extending lateral plates (11) secured on the bridge plate (1).

5. Bridging device according to claim 3, **characterised in that** a lever arm (22) is secured on the upper end of the shaft (21), and the entrainment member (16) of a push-rod (14), which is displaceable along the bridge plate (1) through the extension portion (4) or resp. its carrier (3) in opposition to the action of a spring (18), acts on said lever arm.

6. Bridging device according to claim 5, **characterised in that**, when the push-rod (14) is relieved of load, and the spring (18) is thereby relieved of tension, the entrainment member (16) moves the pivotal lever (23) from the operative position into the inoperative position (retracted state).

7. Bridging device according to claims 5 and 6, **characterised in that** one end of a tension spring (25) is connected to the lever arm (22) or resp. a pin (24) secured thereon, which spring co-operates with the push-rod (14) with its other end and serves to pivot the pivotal lever (23) into the operative position.

8. Bridging device according to claim 7, **characterised in that**, when the pivotal lever (23) is in the operative position, the lever arm (22) or resp. its pin (24) abuts against the entrainment member (16) of the push-rod (14) by the action of the tension spring (25).

9. Bridging device according to claim 1, **characterised in that**, in the operative position, the supporting member (pivotal lever 23) engages in a bore-like recess (30) of a covering (plate 10), which defines laterally, wholly or partially, the recess (5) in the platform (6) which serves to accommodate the bridge plate (1).

10. Bridging device according to claims 7 and 9, **characterised in that**, by the action of the tension spring (25), the pivotal lever (23) is in contact with the covering (10) when the bridge plate (1) is moved from its upper end position into the inoperative position.

## Revendications

1. Niveleur de quai comportant un tablier (1), qui est muni à l'extrémité libre d'un prolongement (4) pouvant être entré et sorti pour reposer sur la plate-forme à charger ou à décharger et qui peut basculer à l'extrémité côté quai par rapport à un axe (2) horizontal, et des éléments (23) de soutien qui sont montés d'un côté ou de part et d'autre du tablier (1) et qui peuvent être sortis vers le côté et à nouveau rentrés pour maintenir le tablier (1) en la position de repos, les éléments (23) de soutien prenant appui sur le quai (6) latéralement à côté du tablier (1) et étant actionnés par un déplacement du prolongement (4) ou d'un chariot qui le porte, et, de plus, le tablier (1) étant monté dans une fosse (5) du quai correspondant à sa dimension et, lorsque le tablier (1) se trouve en la position de repos, sa surface (1') et la surface (7) du quai étant en affleurement, **caractérisé en ce que** les éléments (23) de soutien sont montés à une distance telle au-dessous de la surface (1') du tablier (1) qu'ils se trouvent encore au-dessous de la surface (7) du quai lorsque le tablier (1) se trouve en la position d'extrémité supérieure.

2. Niveleur suivant la revendication 1, **caractérisé en ce que** les éléments (23) de soutien se trouvent au-dessous de la partie du bord voisine des tôles (11) latérales qui sont fixées de part et d'autre du tablier (1) et qui s'étendent vers le bas.

3. Niveleur suivant la revendication 1, **caractérisé en ce que** l'élément de soutien est un levier (23) basculant qui est fixé à l'extrémité inférieure d'un arbre (21) horizontal tournant, et **en ce que** le prolongement (4) ou son chariot (3) agit sur l'extrémité supérieure de l'arbre (21) pour faire tourner cet arbre.

4. Niveleur suivant la revendication 3, **caractérisé en ce que** l'arbre (21) est monté dans un tube (20) qui est fixé à la face intérieure des tôles (11) latérales qui sont fixées au tablier (1) et qui s'étendent vers le bas.

5. Niveleur suivant la revendication 3, **caractérisé en ce qu'**il est fixé à l'extrémité supérieure de l'arbre (21) un bras (22) de levier sur lequel agit l'élément (16) d'entraînement d'un coulisseau (14) pouvant être déplacé le long du tablier (1), par le prolongement (4) ou son chariot (3), à l'encontre de la force d'un ressort (18).

6. Niveleur suivant la revendication 5, **caractérisé en ce que**, par délestage du coulisseau (14) et par le ressort (18) qui se détend, l'élément (16) d'entraînement déplace le levier (23) basculant de la position active à la position de repos (état rentré).

7. Niveleur suivant la revendication 5 et 6, **caractérisé en ce qu'**il est relié au bras (22) de levier ou à une broche (24) qui y est fixée, une extrémité d'un ressort (25) de traction qui attaque par son autre extrémité le coulisseau (14) et qui sert à faire basculer le levier (23) basculant en la position active.

8. Niveleur suivant la revendication 7, **caractérisé en ce que**, lorsque le levier (23) basculant se trouve en la position active, le bras (22) de levier ou sa broche (24) s'applique sous l'effet du ressort (25) de traction à l'élément (16) d'entraînement du coulisseau (14).

9. Niveleur suivant la revendication 1, **caractérisé en ce que** l'élément de soutien (levier 23 basculant) rentre en la position active dans un évidemment (30) du genre d'un trou d'un revêtement (tôle 10) qui délimite latéralement totalement ou en partie la fosse (5) ménagée dans le quai (6) et servant à recevoir le tablier (1).

10. Niveleur suivant la revendication 7 et 9, **caractérisé en ce que** le levier (23) basculant touche le revêtement (10) sous l'effet du ressort (25) de traction si le tablier (1) est déplacé de sa position supérieure d'extrémité à la position de repos.
